# EUROPEAN PATENT SPECIFICATION

(11) **EP 1 294 228 B1**
(45) Date of publication and mention of the grant of the patent: **21.12.2005**
(21) Application number: 01938460.1
(22) Date of filing: 15.06.2001
(51) Int. Cl.: A01M 7/00

(54) **IMPROVEMENTS RELATING TO AGRICULTURAL SPRAY SYSTEMS**
VERBESSERUNGEN AN LANDWIRTSCHAFTLICHEN SPRÜHSYSTEMEN
AMELIORATION DE SYSTEMES AGRICOLES DE PULVERISATION

(30) Priority: 16.06.2000 GB 0014644
(43) Date of publication of application: 26.03.2003
(73) Proprietor: Price, Richard David, Pontypool, Gwent NP4 8QX (GB)
(72) Inventor: Price, Richard David, Pontypool, Gwent NP4 8QX (GB)
(74) Representative: James, Michael John Gwynne
(86) International application number: PCT/GB2001/002657
(87) International publication number: WO 2001/095714

(56) References cited:
- EP-A- 0 916 259
- FR-A- 2 555 469
- FR-A- 2 678 181
- US-A- 3 926 371
- US-A- 4 714 196

## Description

This invention relates to agricultural spray systems. It is concerned with a system which allows the concentration of active chemical ingredient in a spray boom to be changed quickly whilst a crop sprayer is on the move, allowing for example weed killer to be targeted only to areas of the field with a weed problem.

The advent of low cost accurate positioning systems such as GPS means that a farmer can specify areas of a field which need particular treatment. A treatment plan can be constructed which will then command a crop sprayer to apply chemical at different rates in different areas of a field. This principle is widely understood and increasingly practised as "precision farming" in areas where farming is technically developed. Many systems of hardware and software are available to implement such treatment plans and the invention is intended to apply broadly to all types.

The problem encountered with any system which seeks to vary the volume of chemical applied through a hydraulic nozzle is that such nozzles have only a narrow range of flow rates for creating a suitable spray for chemical application. A typical spray nozzle produces suitable droplets at an ideal flow rate plus or minus say 20%. If the flow rates rise too high then a very high back pressure is created which leads to a fine spray being created, resulting in spray evaporation and drift. This is inefficient and can lead to undesirable environmental consequences. If flow rate is lower than optimum, then the nozzle will not produce a full spray but rather a dribble or a series of large droplets, which will not give even distribution of the chemical.

One currently practised solution to this problem is to vary the amount of one or more active ingredients by injecting pure chemical into the carrier flow at varying amounts according to a treatment plan. In this case the total flow through the nozzle remains constant but carrier and ingredient concentration alters to achieve the desired effect. This system allows chemical usage to be varied over a wide range by using variable displacement or speed pumps which can vary between zero and maximum rate without affecting spray droplet formation, since the nozzle pressure remains at a constant optimum flow rate.

One of the problems of this type of system which the invention seeks to address is that, as a chemical composition change is introduced, there is a variation across the width of the spray boom as to when the "new" chemical concentration arrives at each nozzle. This is because the pipeline volume is greater for nozzles further away from the feed point of the boom (usually in the centre of the boom). Thus, in practice, chemical of a "new" concentration emerges first from nozzles at the centre of the spray boom and gradually works its way along the length of the boom until it reaches the outer extremities. Since spray booms are often organised into four or more sections, complex exit patterns are produced. By the time one change has settled down, of course, a second concentration change may be required. It can be seen that this would produce a result which would be difficult to predict and thus planning becomes impossible. In general it would be preferable for a chemical change to emerge from all nozzles simultaneously, so that spraying could proceed in rectangular blocks.

There are two basic types of injection pump used for this type of sprayer which each have their advantages. High pressure pumps are generally high precision metering devices which develop greater pressure than the actual spray nozzle actuating pressure. This gives the fastest possible response since the chemical is injected downstream of the main carrier pump and just before the spray nozzles, which means that spray lag or waiting time for the chemical change to appear is reduced. Generally, the main carrier pump can be used with carrier only (often water) which is better for reliability and safety when servicing. Also the main carrier pump can be used to agitate tank contents by taking off a bypass flow. In order for the lag to be predictable it is normal to adjust the flow rate of carrier and chemical fluid in proportion to forward speed, thus still giving a limitation to speed variation. However, these pumps are expensive and complicated and this limits the market place for them. They may also suffer when asked to pump difficult fluids such as flowable powders. Nevertheless, the ability to produce a quick change of chemical dose means that they can be used to achieve spot spraying in practice, although exit pattern problems still exist.

Low pressure pumps are the other basic type and these are lower cost and often of the peristaltic type which are easy to service and replace wearing parts. But they suffer from the overwhelming disadvantage that they produce only a minimal output pressure. This means that they have to inject the active chemical into the inlet side of the main carrier pump. This pump may be situated some way from the spray boom resulting in a long delay time whilst a change in the chemical mix works its way from the pump, through pipework to the nozzles. This delay is known as lag and in practice means that the system may be unable to achieve the precise spot spraying results required by "precision farming" techniques.

According to the present invention there is provided an agricultural spray system for use with a spray boom having a plurality of nozzles along its length, the system comprising a first reservoir for a carrier liquid, a second reservoir for a chemical, means for controllably delivering the carrier liquid and the chemical to a common conduit with a point of entry to the boom, a pump in said conduit, and a return flow path back to said conduit upstream of the pump from a point or points on the boom beyond the nozzles from said point of entry, the arrangement being such that the pump circulates a mixture of carrier and chemical, a portion of which mixture is sprayed through the nozzles while the remainder returns via the boom to said conduit to mix with the carrier liquid and chemical for recirculation.

So on its return chemical diluted to the current desired concentration is mixed with further liquid carrier largely to make up for the mixture sprayed from the nozzles, the full make-up being completed by the introduction of further chemical to bring the mixture back to the desired strength. The continuous circulation means that any variation in this mixture is rapidly transmitted to all the nozzles, and the pump can be set to a flow rate that is at or very near the optimum for the nozzles to spray efficiently.

"Chemical" as used herein is intended to encompass a mixture of chemicals. But it may be preferred, when more than one chemical is to be sprayed, to have a plurality of second reservoirs each with means for controllably delivering a chemical from the respective reservoir to said common conduit.

The delivery of the or at least one chemical to the conduit will preferably be upstream of the pump, whose action can promote mixing with the recirculated and make-up carrier liquid. But it could alternatively be downstream of the pump, although this would probably require its own high pressure pump, adding to the expense and possibly not achieving such good mixing. It may be appropriate to adopt this only when there are two or more chemicals delivered from separate reservoirs, keeping the delivery point of one separate from the other or others.

The delivery of the carrier liquid to the conduit will generally be upstream of the pump, and may be in either of two ways.

In one the conduit has a mixing chamber at its upstream end into which the carrier liquid and the mixture to be recirculated are discharged, and this chamber can have gravity feed to the conduit, being equipped with level sensing means to govern the supply of carrier liquid and thereby maintain a substantially constant level in the mixing chamber.

In the other way, the carrier liquid and the mixture to be recirculated are fed directly into the conduit to mix therein. In this case, the or each return flow path may have at its downstream end a valve for controlling the recirculation rate.

Advantageously there may be nozzles in the or each return path, and preferably these will be interspersed lengthwise of the boom with the other nozzles. This can give a more rapid response to changes in strength of the mixture.

The pump will generally be variable speed, and the controlled delivery of the or each chemical and the carrier liquid may also be through pumps.

Alternatively, the carrier liquid may have a gravity feed duct with valve means therein, these including a non-return valve to ensure no ,contamination of the first reservoir by any chemical.

Conveniently the nozzles can be selectively turned on or off and have their spray cones varied. Thus the effective width of the boom can be altered, and adjustments made to suit the mixture being sprayed, the nature of what is being sprayed, and the conditions in which spraying is carried out.

The point of entry will generally be central of the boom. But for spraying narrow swathes it may be appropriate to take one half of the boom out of the commission and to use only the other half. The system will still work in the same way.

For a better understanding of the invention, some embodiments will now be described, by way of example, with reference to the accompanying drawing, in which:
Figure 1 is a diagram of an agricultural spray system, and
Figure 2 is a diagram of another agricultural spray system.

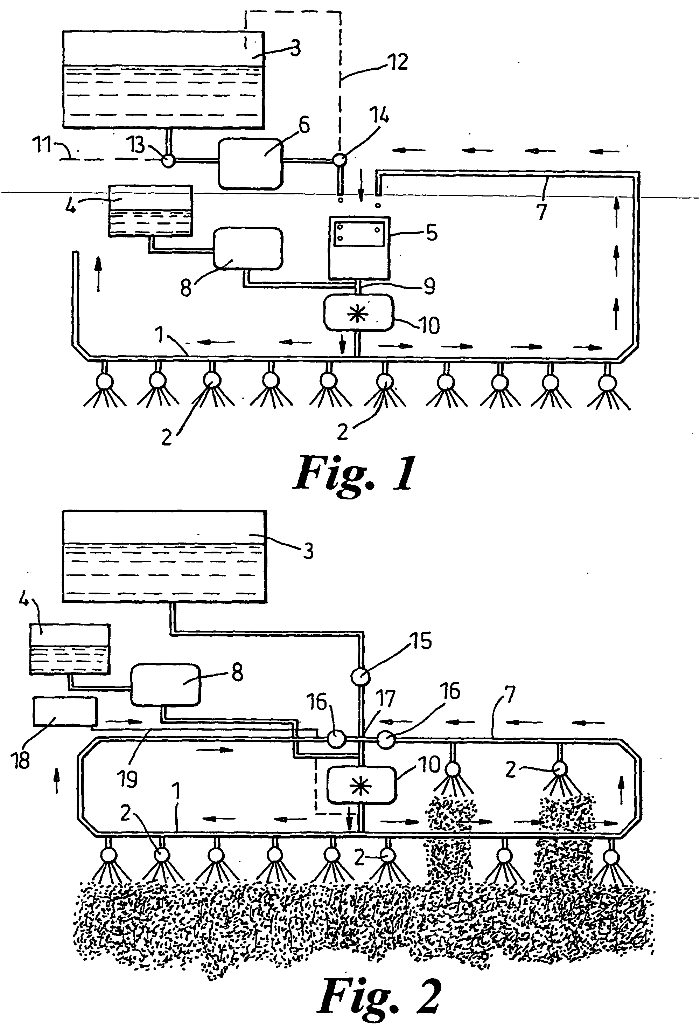

In Figure 1 a boom 1 has a plurality of nozzles 2 evenly spaced along its length, each nozzle having its own individual control valve (not shown) allowing many different combinations of nozzles to be in and out of use. The boom 1 sprays a mixture of carrier from a tank 3 and chemical from a tank 4.

A mixing chamber 5 receives the carrier (usually water) via a pump 6 and also a portion of the spray mixture not delivered through the nozzles but returned via ducts 7 from the ends of the boom (only one of these ducts being shown). The fluid level in the chamber 5 is maintained substantially constant, as mentioned above. Another pump 8 delivers chemical from the tank 4 to an outlet conduit 9 from the chamber 5 at a point upstream of a third pump 10 with a variable speed drive. This is the pump that circulates the mixture at a high rate as indicated by the arrows, and its action will homogenise the chemical from the tank 4 with the fluid from the mixing chamber 5.

As mentioned above, what is not sprayed through the nozzles 2 returns via ducts 7, optionally with variable or fixed restrictions therein, to the chamber 5, to be mixed with carrier. A dilute mixture therefore enters the conduit 9, to be brought back up to strength again immediately before the pump 10. Should the treatment plan require a change of concentration, the output of the pump 8 will be raised or lowered accordingly, and the effect of this will be felt almost immediately along the boom, with little lag, due to the fast circulation by the pump 10, between the innermost and outermost nozzles.

In practice there will be sensors providing an automatic control computer with inputs representing forward speed and fluid flow. The treated width will also be an input. This information will be used to govern the spraying pressure and the amount of chemical injected.

The pump 6 can serve a dual purpose and be used to fill the tank 3 as indicated by the broken lines 11 and 12. With suitable valves in the pipework at 13 and 14, the outlet of the tank 3 and the delivery to the tank 5 can be blocked while carrier from supply line 11 is pumped through line 12 into the tank 3. The pump 6 preserves its isolation from the chemical. But if this facility is not required, the pump 6 could be dispensed with and there could simply be gravity feed from the tank 3 to the chamber 5, via a control valve.

The system of Figure 1 shows the chemical being introduced between the mixing chamber 5 and the pump 10. It would be possible to direct the chemical into the chamber 5, but its composition often includes a wetting agent, which will promote frothing in a relatively large vessel. There should not be this problem with the chemical joining the flow in the relatively confined conduit 9.

As mentioned above, there is a third way, namely having the outlet of the pump 8 to a point in the conduit 9 downstream of the pump 10, this being illustrated by a broken line in Figure 2 along with certain other modifications.

One of these is a possibly different arrangement of spray nozzles 2. Instead of all the nozzles being on the outward leg of the boom 1 as shown on the left hand side some may be fitted to the return duct 7 as shown on the right hand side. By alternating them as one goes from the boom centre to the tip a change in chemical composition will be blended across the spray width, with a 50% charge across that width being achieved twice as fast as in the layout of Figure 1. This can therefore give extra precision.

Another modification is the omission of the mixer tank 5 and the provision of a non-return valve 15 in the supply from the carrier tank, which is no longer pumped but which relies on gravity feed, as suggested above for the Figure 1 system. The valve 15 prevents the chemical from contaminating the carrier tank 3. In addition, each return duct 7 has a valve 16 at its downstream end, adjustable to help set the desired recirculation rate. Again, this was an option proposed for Figure 1. The short length of pipe leading from the junction 17 to the inlet from the pump 8 is effectively the mixing chamber.

The recirculation rate is of course also determined by the speed of the pump 10, and that and the valves 16 may be individually controlled to give different effects. For example, when spraying over an area requiring different concentrations of chemical, for quick alteration it is desirable to have rapid circulation in the boom and the return ducts, and this means a fast running pump 10 and fully open or nearly fully open valves 16. In contrast, for washing out the boom, the pump 8 would be switched off, the valves 16 would be closed, and the pump 10 would be at a speed which would provide just enough flow for the aggregate nozzle output.

Purging the system can be done in various other ways, perhaps using an independent flushing liquid, usually water, rather than the carrier, and the liquid could be made to flow in the reverse direction to the arrows. This is illustrated in Figure 2 by yet another pump 18 with its outlet 19 joining one of the return ducts 7 near its valve 16. Alternatively, compressed air might be used to eliminate all water or liquid that might freeze in the pipework or nozzles.

It has been assumed above that just one chemical is added to the carrier. It may be appropriate on occasions to spray with more than one chemical and to do so simultaneously. This could be done by pre-mixing them in the single tank 4. But it may be preferred, advisable, or possibly even necessary, to keep them separate until they are diluted by the carrier and on the point of being sprayed. Therefore there may be two or even more tanks 4 and pumps 8 in parallel. Also, they might not all deliver into the carrier liquid circuit at the same point. For example, one delivery point could be upstream of the pump 10 and another downstream of that pump. Where frothing would not be a problem, delivery into the chamber 5 in the Figure 1 arrangement is a further option.

## Claims

1. An agricultural spray system for use with a spray boom having a plurality of nozzles along its length, the system comprising a first reservoir for a carrier liquid, a second reservoir for a chemical, means for controllably delivering the carrier liquid and the chemical to a common conduit with a point of entry to the boom, a pump in said conduit, and a return flow path back to said conduit upstream of the pump from a point or points on the boom beyond the nozzles from said point of entry, the arrangement being such that the pump circulates a mixture of carrier and chemical, a portion of which mixture is sprayed through the nozzles while the remainder returns via the boom to said conduit to mix with the carrier liquid and chemical for recirculation.

2. An agricultural spray system as claimed in Claim 1, wherein there is a plurality of second reservoirs each with means for controllably delivering a chemical from the respective reservoir to said common conduit.

3. An agricultural spray system as claimed in Claim 1 or 2, wherein the delivery of the or at least one chemical to the conduit is upstream of the pump.

4. An agricultural spray system as claimed in Claim 2 or Claim 3 as appendant to Claim 2, wherein the delivery of one of the chemicals to the conduit is downstream of the pump.

5. An agricultural spray system as claimed in any preceding Claim, wherein the delivery of the carrier liquid to the conduit is upstream of the pump.

6. An agricultural spray system as claimed in Claim 5, wherein the conduit has a mixing chamber at its upstream end into which the carrier liquid and the mixture to be recirculated are discharged.

7. An agricultural spray system as claimed in Claim 6, wherein the mixing chamber has gravity feed to the conduit and is equipped with level sensing means to govern the supply of carrier liquid and thereby maintain a substantially constant level in the mixing chamber.

8. An agricultural spray system as claimed in Claim 5, wherein the carrier liquid and the mixture to be recirculated are fed directly into the conduit to mix therein.

9. An agricultural spray system as claimed in Claim 8, wherein the or each return flow path has at its downstream end a valve for controlling the recirculation rate.

10. An agricultural spray system as claimed in any preceding claim, wherein there are nozzles in the or each return path.

11. An agricultural spray system as claimed in Claim 10, wherein the return path nozzles are interspersed lengthwise of the boom with the other nozzles.

12. An agricultural spray system as claimed in any preceding claim, wherein the pump is variable speed.

13. An agricultural spray system as claimed in any preceding claim, wherein the means for controllably delivering the or each chemical includes a pump.

14. An agricultural spray system as claimed in any preceding claim, wherein the means for controllably delivering the carrier liquid includes a pump.

15. An agricultural spray system as claimed in any one of Claims 1 to 13, wherein the means for controllably delivering the carrier liquid is a gravity feed duct with valve means therein.

16. An agricultural spray system as claimed in Claim 15, wherein the valve means includes a non-return valve.

17. An agricultural spray system as claimed in any preceding claim, wherein the nozzles can be selectively turned on or off and have their spray cones varied.

## Patentansprüche

1. Landwirtschaftliches Sprühsystem zur Benutzung mit einem Sprühausleger, der über seine Länge mehrere Düsen aufweist, **gekennzeichnet durch** einen ersten Behälter für eine Trägerflüssigkeit, einen zweiten Behälter für eine chemische Substanz, eine Einrichtung zur gesteuerten Abgabe der Trägerflüssigkeit und der chemischen Substanz an eine gemeinsame Leitung mit einer Eintrittsstelle in den Ausleger, einer Pumpe in der Leitung, einem Rückflußweg zu der Leitung zustromseitig der Pumpe von einer Stelle oder von Stellen auf dem Ausleger jenseits der Düsen von der Eintrittsstelle aus, wobei die Anordnung so getroffen, daß die Pumpe ein Gemisch aus Trägerflüssigkeit und chemischer Substanz umwätzt und ein Teil dieses Gemisches **durch** die Düsen versprüht wird, während der Rest über den Ausleger zur Leitung zurückkehrt, um mit der Trägerflüssigkeit und der chemischen Substanz zwecks erneuter Umwälzung vermischt zu werden.

2. Landwirtschaftliches Sprühsystem nach Anspruch 1, **dadurch gekennzeichnet, daß** mehrere zweite Behälter vorhanden sind, die jeder mit einer Einrichtung zur steuerbaren Abgabe einer chemischen Substanz aus dem entsprechenden Behälter an die gemeinsame Leitung versehen sind.

3. Landwirtschaftliches Sprühsystem nach Anspruch 1 oder 2, **dadurch gekennzeichnet, daß** die Abgabe der chemischen Substanz oder wenigstens einer chemischen Substanz an die Leitung zustromseitig der Pumpe gelegen ist

4. Landwirtschaftliches Sprühsystem nach Anspruch 2 oder 3 in Abhängigkeit vom Anspruch 2, **dadurch gekennzeichnet, daß** die Abgabe einer der chemischen Substanzen an die Leitung abstromseitig der Pumpe erfolgt.

5. Landwirtschaftliches Sprühsystem nach einem der vorhergehenden Ansprüche, **dadurch gekennzeichnet, daß** die Abgabe der Trägerflüssigkeit an die Leitung zustromseitig der Pumpe erfolgt.

6. Landwirtschaftliches Sprühsystem nach Anspruch 5, **dadurch gekennzeichnet, daß** die Leitung an ihrem zustromseitigen Ende eine Mischkammer aufweist, in die die Trägerflüssigkeit und das erneut umzuwälzende Gemisch eingespeist werden.

7. Landwirtschaftliches Sprühsystem nach Anspruch 6, **dadurch gekennzeichnet, daß** die Mischkammer einen Schwerkraftzulauf zu der Leitung hat und mit einer Niveaufühleinrichtung ausgerüstet ist, um die Zufuhr der Trägerflüssigkeit zu steuern und **dadurch** ein im wesentlichen konstantes Niveau in der Mischkammer aufrecht zu erhalten.

8. Landwirtschaftliches Sprühsystem nach Anspruch 5, **dadurch gekennzeichnet, daß** die Trägerflüssigkeit und das Gemisch, die wieder umgewälzt werden, direkt in die Leitung eingespeist werden, um sich in ihr zu mischen.

9. Landwirtschaftliches Sprühsystem nach Anspruch 8, **dadurch gekennzeichnet, daß** der oder jeder Rückflußweg an seinem abstromseitigen Ende ein Ventil zur Steuerung der Umwälzmenge aufweist.

10. Landwirtschaftliches Sprühsystem nach einem der vorhergehenden Ansprüche, **dadurch gekennzeichnet, daß** in dem oder jedem Rückflußweg Düsen angeordnet sind.

11. Landwirtschaftliches Sprühsystem nach Anspruch 10, **dadurch gekennzeichnet, daß** die Rückflußwegdüsen längs des Auslegers zwischen den anderen Düsen verteilt sind.

12. Landwirtschaftliches Sprühsystem nach einem der vorhergehenden Ansprüche, **dadurch gekennzeichnet, daß** die Pumpe eine veränderliche Drehzahl aufweist.

13. Landwirtschaftliches Sprühsystem nach einem der vorhergehenden Ansprüche, **dadurch gekennzeichnet, daß** die Einrichtung zur kontrollierten Abgabe der oder jeder chemischen Substanz eine Pumpe aufweist.

14. Landwirtschaftliches Sprühsystem nach einem der vorhergehenden Ansprüche, **dadurch gekennzeichnet, daß** die Einrichtung zur kontrollierten Abgabe der Trägerflüssigkeit eine Pumpe aufweist.

15. Landwirtschaftliches Sprühsystem nach einem der vorhergehenden Ansprüche 1 bis 13, **dadurch gekennzeichnet, daß** die Einrichtung zur kontrollierten Abgabe der Trägerflüssigkeit eine Schwerkraftzufuhrleitung mit einem darin befindlichen Ventil ist.

16. Landwirtschaftliches Sprühsystem nach Anspruch 15, **dadurch gekennzeichnet, daß** das Ventil ein Rückschlagventil ist.

17. Landwirtschaftliches Sprühsystem nach einem der vorhergehenden Ansprüche, **dadurch gekennzeichnet, daß** die Düsen wahlweise ein- oder ausgeschaltet werden können und daß ihre Sprühkegel variiert werden können.

## Revendications

1. système de pulvérisation pour l'agriculture destiné à être utilisé avec une rampe de pulvérisation ayant une pluralité de buses le long de sa longueur, le système comprenant un premier réservoir pour un liquide de véhicule, un second réservoir pour un produit chimique, un moyen pour délivrer de façon contrôlable le liquide de véhicule et le produit chimique à un conduit commun avec un point d'entrée à la rampe, une pompe dans ledit conduit, et un trajet d'écoulement de retour revenant audit conduit en amont de la pompe à partir d'un point ou de points sur la rampe au-delà des buses à partir dudit point d'entrée, la disposition étant telle que la pompe fait circuler un mélange de véhicule et de produit chimique, une partie dudit mélange étant pulvérisée à travers les buses alors que le reste retourne par l'intermédiaire de la rampe audit conduit pour se mélanger avec le liquide de véhicule et le produit chimique en vue d'un recyclage.

2. Système de pulvérisation pour l'agriculture selon la revendication 1, dans lequel il y a une pluralité de seconds réservoirs chacun avec un moyen pour délivrer de façon contrôlable un produit chimique provenant du réservoir respectif audit conduit commun.

3. Système de pulvérisation pour l'agriculture selon l'une des revendications 1 ou 2, dans lequel la délivrance du ou d'au moins un produit chimique au conduit est en amont de la pompe.

4. Système de pulvérisation pour l'agriculture selon la revendication 2 ou la revendication 3 en tant que dépendante de la revendication 2, dans lequel la délivrance de l'un des produits chimiques dans le conduit est en aval de la pompe.

5. système de pulvérisation pour l'agriculture selon l'une quelconque des revendications précédentes, dans lequel la délivrance du liquide de véhicule dans le conduit est en amont de la pompe.

6. Système de pulvérisation pour l'agriculture selon la revendication 5, dans lequel le conduit a une chambre de mélange à son extrémité amont dans laquelle le liquide de véhicule et le mélange à recycler sont déchargés.

7. Système de pulvérisation pour l'agriculture selon la revendication 6, dans lequel la chambre de mélange a une alimentation par gravité dans le conduit et est équipée d'un moyen de détection de niveau pour gouverner l'alimentation de liquide de véhicule et par là maintenir un niveau sensiblement constant dans la chambre de mélange.

8. Système de pulvérisation pour l'agriculture selon la revendication 5, dans lequel le liquide de véhicule et le mélange à recycler sont introduits directement dans le conduit pour se mélanger dans celui-ci.

9. Système de pulvérisation pour l'agriculture selon la revendication 8, dans lequel le ou chaque trajet d'écoulement de retour a, à son extrémité aval, une soupape pour commander le taux de recyclage.

10. Système de pulvérisation pour l'agriculture selon l'une quelconque des revendications précédentes, dans lequel il y a des buses dans le ou chaque trajet de retour.

11. Système de pulvérisation pour l'agriculture selon la revendication 10, dans lequel les buses de trajet de retour sont entremêlées le long de la longueur de la rampe avec les autres buses.

12. Système de pulvérisation pour l'agriculture selon l'une quelconque des revendications précédentes, dans lequel la pompe est à vitesse variable.

13. Système de pulvérisation pour l'agriculture selon l'une quelconque des revendications précédentes, dans lequel le moyen pour délivrer de façon contrôlable le ou chaque produit chimique comprend une pompe.

14. Système de pulvérisation pour l'agriculture selon l'une quelconque des revendications précédentes, dans lequel le moyen pour délivrer de façon contrôlable le liquide de véhicule comprend une pompe.

15. Système de pulvérisation pour l'agriculture selon l'une quelconque des revendications 1 à 13, dans lequel le moyen pour délivrer de façon contrôlable le liquide de véhicule est un conduit d'alimentation par gravité avec un moyen de soupape dans celui-ci.

16. Système de pulvérisation pour l'agriculture selon la revendication 15, dans lequel le moyen de soupape comprend un clapet de non-retour.

17. Système de pulvérisation pour l'agriculture selon l'une quelconque des revendications précédentes, dans lequel les buses sont aptes à être mises en marche ou coupées de façon sélective et ont des cônes de pulvérisation que l'on peut faire varier.
